# EUROPÄISCHE PATENTANMELDUNG

(11) **EP 1 894 687 A1**
(43) Veröffentlichungstag der Anmeldung: **05.03.2008**
(21) Anmeldenummer: 06018173.2
(22) Anmeldetag: 31.08.2006
(51) Int. Cl.: B27B 33/02, B23D 61/02

(54) **Sägezahn für ein Kreissägeblatt oder eine Bandsäge**

(71) Anmelder: Kock GmbH Zerspannungstechnik, 25436 Moorrege (DE)
(72) Erfinder: Kock, Wolfgang, 25436 Moorrege (DE)
(74) Vertreter: Meyer, Ludgerus

(57) **Zusammenfassung**

Die Erfindung betrifft einen Sägezahn für ein Kreissägeblatt oder eine Bandsäge, wobei der Sägezahn einen trapezförmigen Querschnitt an einer Dachkante (1) aufweist, die rechtwinklig zur Bewegungsrichtung des Sägezahns verläuft und zwei spiegelsymmetrisch zur Mittelebene (2) des Sägezahns von den Enden der Dachkante (1) schräg nach außen verlaufende Außenflächen (3, 4) enthält. Erfindungsgemäß schließt sich parallel zur Dachkante (1) an die Schneidflanken (3, 4) jeweils eine nach außen bis zu den Seitenflanken (7, 8) verlaufende Schneidschulter (5, 6) an. Die Erfindung erlaubt eine im Wesentlichen gratfreie Zerspanung von dünnen, insbesondere metallischen Werkstücken mit hoher Schneidleistung.

## Beschreibung

Die Erfindung betrifft einen Sägezahn für ein Kreissägeblatt oder eine Bandsäge nach dem Oberbegriff des Anspruchs 1.

Die Eigenschaften der Sägezähne eines Kreissägeblattes oder einer Bandsäge bestimmen beim Sägen den Arbeitsfortschritt, die Standzeit und die Schnittqualität, bezogen auf den jeweilig zu bearbeitenden Werkstoff. Die Eigenschaften einer Säge sind außerdem durch die Zahnzahl pro Längeneinheit, die Zahngröße und die Zahnformen bestimmt, die insbesondere die Schnittqualität bestimmen.

Neben Flachzahnformen haben sich für höhere Qualitäten vor allem geschränkte Zähne, Wechselzähne und Trapezflachzähne durchgesetzt. Bei Wechselzähnen lässt sich die Belastung gut verteilen, was zu hoher Standzeit und hoher Schnittqualität führt. Ein Flachzahn hat bei spröden Werkstoffen wie Spanplatten gute Schnittleistungen. Für harte Werkstoffe ist jedoch ein Trapezzahn besser geeignet, da dieser eine gute Belastungsverteilung aufweist. Solche Zähne sind sehr robust und erreichen hohe Standzeiten bei guter Schnittqualität.

Beim Schneiden dünner Werkstücke, wie z.B. Stahlblechen, ist es von besonderer Bedeutung, an den Schnittkanten möglichst wenig Grate entstehen zu lassen. Um hohe Schnittgüten bei möglichst hoher Vorschubgeschwindigkeit und einem geringfügigen Grat erreichen zu können, sind auch Sägeblätter bekannt geworden, die Sägezähne in Gruppen mit gleich gestalteten Sägezähnen oder auch unterschiedlichen Sägezähnen verwenden. Sägeblätter mit Gruppen von Sägezähnen, insbesondere wenn diese unterschiedlich sind, sind jedoch schwierig herzustellen und entsprechend kostenaufwendig.

Aus der DE 39 34 872 C2 ist ein Kreissägeblatt bekannt geworden, das mit Zähnen in zwei verschiedenen Höhen versehen ist, die abwechselnd aufeinander folgen und trapezförmige Querschnitte aufweisen, deren Basisbreite bei sämtlichen Zähnen gleich ist, wobei die schrägen Trapezseiten der Querschnitte sämtlicher Zähne miteinander bezüglich ihres Flugkreises fluchten. Die Dachkanten aufeinander folgender Zähne sind jedoch in unterschiedlicher Höhe angeordnet.

Der Nachteil einer solchen Anordnung liegt darin, dass die Zähne mit höherer Dachkante schneller verschleißen als diejenigen mit niedrigerer Dachkante, so dass sich eine ungleiche Abnutzung des Kreissägeblattes ergibt.

Aus der DE 20 2005 003 643 U1 ist ein Kreissägeblatt bekannt, das auf dem Umfang des Kreissägeblatts Folgen von Schneidzähnen aufweist, deren Schneidflächen unterschiedliche Abstände zueinander aufweisen. Es ist auch angegeben, dass Sägezähne mit unterschiedlichen Geometrien hintereinander angeordnet werden können. Eine Folge von Sägezähnen besteht z.B. aus einem Zahnsatz mit einem Vorschneidzahn, der als Trapezzahn ausgebildet sein kann, und zwei identischen Fertigschneidzähnen, insbesondere Flachzähnen.

Der Aufwand zur Herstellung eines derartigen Sägeblatts ist beträchtlich, da die auf dem Umfang des Kreissägeblatts verwendeten Sägezähne stark unterschiedliche Geometrien aufweisen.

Auch aus der DE 201 08 238 O1 ist ein Kreissägeblatt mit Wechsel- und Räumzähnen bekannt, bei dem auf dem Umfang Zahngruppen verwendet werden, die jeweils mindestens zwei Wechselzähne und einen Räumzahn aufweisen. Die Räumzähne können als Flachzahn, als Trapezzahn, als Dachzahn oder Hohlzahn ausgebildet sein.

Der Erfindung liegt die Aufgabe zugrunde, einen Sägezahn für ein Kreissägeblatt oder eine Bandsäge anzugeben, der auch bei dünnen Werkstücken eine hohe Schnittgüte, eine hohe Vorschubgeschwindigkeit und eine gute Belastungsverteilung aufweist und nur einen geringfügigen oder überhaupt keinem Grat entstehen lässt.

Die Erfindung geht aus von einem Sägezahn für ein Kreissägeblatt oder eine Bandsäge gemäß Oberbegriff des Anspruchs 1, der einen trapezförmigen Querschnitt mit einer Dachkante aufweist, die rechtwinklig zur Bewegungsrichtung des Sägezahns verläuft und spiegelsymmetrisch zur Mittelebene des Sägezahns von den Enden der Dachkante schräg nach außen verlaufende Schneidflanken enthält.

Gemäß Kennzeichen des Anspruchs 1 schließt sich parallel zur Dachkante an die Schneidflanken jeweils eine nach außen bis zu den Seitenflanken des Sägezahns verlaufende Schneidschulter an.

Der erfindungsgemäße Schneidzahn zeigt daher gleichzeitig die Eigenschaften eines Trapezzahns und eines Flachzahns. Beide Zahnformen sind in einem einzigen Sägezahn vereinigt, so dass alle Zähne eines Sägeblatts oder einer Bandsäge gleichartig gestaltet sind. Im Vergleich zu einem Sägeblatt mit Gruppen von Sägezähnen jeweils unterschiedlicher Art ist die Zahl der Trapezzahnelemente und Flachzahnelemente erheblich höher, so dass eine weit bessere Schnittqualität erreichbar ist. Während im Stand der Technik bei der Verbindung von Zahngruppen die Zahnteilung im Wesentlichen der Länge einer Zahngruppe entspricht, entspricht bei der Erfindung die Zahnteilung dem Abstand zweier aufeinander folgender Zähne.

Gemäß einer bevorzugten Ausführungsform der Erfindung ist die Höhe des äußeren Endes der Schneidflanken größer als die Höhe der Schneidschultern, wobei zwischen den Schneidflanken und den Schneidschultern jeweils eine Stirnflanke ausgebildet ist. Diese verläuft vorzugsweise parallel zur Mittelflanke des Sägezahns. Die Ausbildung einer solchen Stirnflanke verbessert die Führungsqualität des Sägeblatts und die Sauberkeit des Schnitts.

Zur Vermeidung einer Klemmung des Sägeblatts im Sägeschnitt ist ein axialer Freiwinkel von 1 bis 3° zwischen der Mittelebene des Sägezahns und den Seitenflanken des Sägezahns ausgebildet.

Es hat sich herausgestellt, dass durch Vorsehen eines Eckenradius von < 0,5 mm zwischen Stirnflanken und Schneidschultern einerseits eine einfachere Herstellung des Sägeblatts möglich ist und andererseits beim Sägen eine verbesserte Erfassung des freien Kantenbereichs des Werkstücks durch die Schneidschultern möglich ist.

Die Schneidflanken stehen vorzugsweise in einem Dachwinkel von 60 bis 90° zueinander. Dieser Wert ist ein guter Kompromiss zur trapezförmigen Schneidflankenausbildung.

Ein Sägeblatt kann einstückig mit ihm ausgebildete Sägezähne enthalten, es ist jedoch auch für bestimmte Werkstücke von Vorteil, eine oder mehrere der Schneidkanten oder Schneidschultern aus mit dem Träger des Sägezahns verbundenen Hartmetallschneiden zu bestücken.

Zum Sägen von dünnen Werkstücken wie Stahlblechen, die gegebenenfalls mit Kunststoffen beschichtet sind, hat sich gezeigt, dass der Spanwinkel zwischen der Zahnstirnseite und der Senkrechten auf die Bewegungsrichtung des Sägezahns mit einem Spanwinkel von 10 bis 20° ausgebildet sein sollte. Der radiale Freiwinkel zwischen der rechteckförmigen Dachfläche des Sägezahns und der Laufrichtung des Sägezahns beträgt vorzugsweise etwa 5 bis 10°.

Der erfindungsgemäße Sägezahn kann sowohl am Kreissägeblatt als auch auf einer Bandsäge oder einer entsprechenden Art von Säge ausgebildet sein.

Der Sägezahn gemäß der Erfindung ermöglicht eine hohe Schnittgüte bei hoher Vorschubgeschwindigkeit. Er eignet sich insbesondere zum Schnitt von stahlblechummantelten Schaumstoffpaneelen, die endlos produziert werden und die auf Länge zu schneiden sind. Darüber hinaus hat es sich gezeigt, dass die Zahnform auch zum Schneiden von Kunststoff, Aluminium, Buntmetall, Papier und Holz geeignet ist. Es ergeben sich saubere Oberflächen, das Schneiden erfolgt vibrationsarm und selbststabilisierend. Die Gratausbildung ist sehr klein oder nicht vorhanden und das Schneidwerkzeug weist eine hohe Standzeit auf.

Die Erfindung wird nachstehend anhand eines Ausführungsbeispiels näher erläutert.
Es zeigen:
- Fig. 1: eine Querschnittsansicht durch einen Sägezahn nach der vorliegenden Erfindung,
- Fig. 2: eine Seitenansicht eines Sägezahns,
- Fig. 3: eine Aufsicht auf einen Sägezahn.

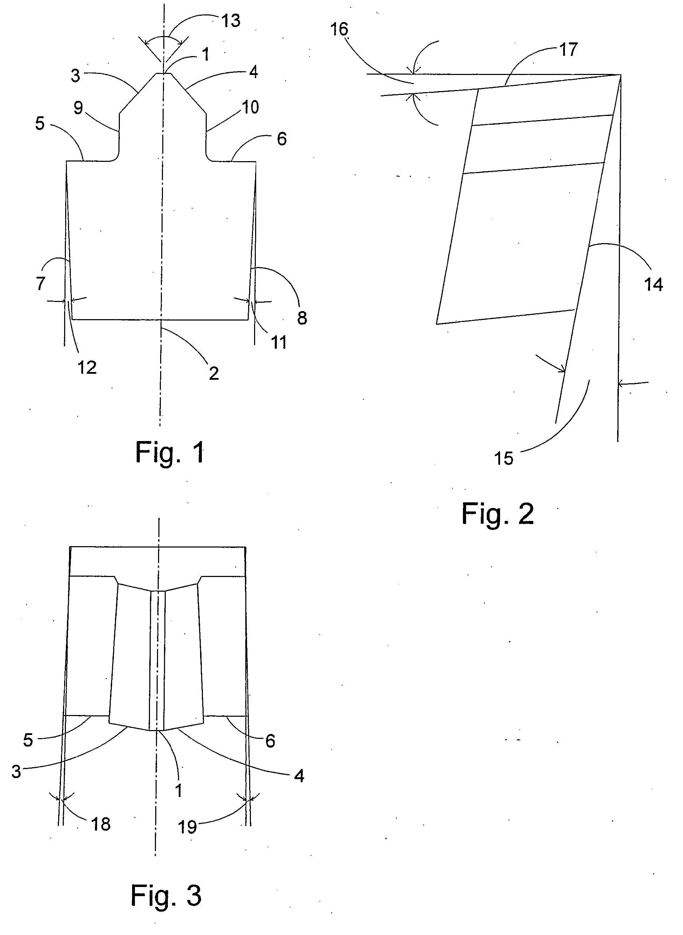

Der in Fig. 1 dargestellte erfindungsgemäße Sägezahn ist spiegelsymmetrisch zur Mittelebene 2 ausgebildet. Der Schneidzahn wird entweder auf einen nicht dargestellten Träger aufgesetzt oder ist Teil des Trägers selbst.

Der obere Bereich des Sägezahns ist trapezförmig ausgebildet, wobei das obere Ende als Dachkante 1 flach ausgebildet ist, die im Fall einer Verwendung bei einem Kreissägeblatt parallel zur Drehachse des Kreissägeblatts verläuft. An die Dachkante 1 schließen sich zwei Schneidflanken 3 und 4 an, die in einem Dachwinkel 13 von 60 bis 90° zueinander verlaufen. Die äußeren Enden der Schneidflanken 3, 4 gehen über in die Stirnflanken 9, 10, die parallel zu Mittelebene 2 verlaufen. An die Stirnflanken 9, 10 schließen sich über einen Eckenradius von ≤ 0,5 mm Schneidschultern 6, 7 an, die (für den Fall einer Kreissäge) parallel zur Drehachse des Kreissägeblatts verlaufen.

Die Breite der Schneidschultern 5, 6 ist jeweils etwa gleich der Breite der Schneidflanken 3, 4. Die Höhe der Stirnflanken 9, 10 ist ebenfalls etwa gleich der Breite der Schneidflanken 5, 6 ausgebildet. Die gedachte Verlängerung der Schneidflanken 3, 4 zur Außenseite des Sägezahns über die Schneidschultern 5, 6 hinaus endet daher etwa am Rand der Schneidschultern 5, 6. Der Rand der Schneidschultern 5, 6 bildet die größte Ausdehnung des Sägezahns, da die anschließenden äußeren Seitenflanken 7, 8 mit einem kleinen axialen Freiwinkel 11, 12 von 1 bis 3° ausgebildet sind.

Fig. 2 zeigt eine Seitenansicht des Sägezahns. Zwischen der Dachfläche 17 und der Bewegungs- bzw. Umlaufrichtung des Sägezahns ist ein radialer Freiwinkel 16 von 5 bis 10° ausgebildet, um eine saubere Zerspanung zu erreichen. Die Zahnstirnseite 14 verläuft zur Senkrechten auf die Bewegungsrichtung des Sägezahns in einem Spanwinkel 15 von 10 bis 20° (positive Zahnstellung).

Fig. 3 zeigt den Sägezahn in Aufsicht. Hier ist ein tangentialer Freiwinkel 18, 19 von 1 bis 3° gezeigt, um eine Klemmung des Sägezahns im Werkstück zu vermeiden.

Die angegebenen Winkel können je nach zu schneidendem Werkstück variiert und optimiert werden.

Mit der Erfindung lässt sich ein Schneidwerkzeug angeben, das bei Auswahl der passenden Schnittparameter in Abhängigkeit vom zu schneidenden Werkstück eine hohe Schnittgüte mit hoher Schnittvorschubgeschwindigkeit erreichen lässt. Insbesondere bei Stahlblech-ummantelten Schaumstoffpaneelen, die endlos produziert und anschließend auf Länge getrennt werden, ergibt sich ein Schnitt, der nahezu oder vollständig gratfrei ist. Die erforderlichen Schnittparameter wie Zahnteilung, Freiwinkel, Zahnmaterial ergeben sich für den Fachmann durch seine Fachkenntnis und einfache Versuche.

### Bezugszeichenliste

- 1: Dachkante
- 2: Mittelebene
- 3: Schneidflanke
- 4: Schneidflanke
- 5: Schneidschulter
- 6: Schneidschulter
- 7: Seitenflanke
- 8: Seitenflanke
- 9: Stirnflanke
- 10: Stirnflanke
- 11: axialer Freiwinkel
- 12: axialer Freiwinkel
- 13: Dachwinkel
- 14: Zahnstirnseite
- 15: Spanwinkel
- 16: radialer Freiwinkel
- 17: Dachfläche
- 18: tangentialer Freiwinkel
- 19: tangentialer Freiwinkel

## Patentansprüche

1. Sägezahn für ein Kreissägeblatt oder eine Bandsäge, wobei der Sägezahn einen trapezförmigen Querschnitt mit einer Dachkante (1) aufweist, die rechwinklig zur Bewegungsrichtung des Sägezahns verläuft, und zwei spiegelsymmetrisch zur Mittelebene (2) des Sägezahns von den Enden der Dachkante (1) schräg nach außen verlaufende Schneidflanken (3, 4) enthält, **dadurch gekennzeichnet, dass** sich parallel zur Dachkante (1) an die Schneidflanken (3, 4) jeweils eine nach außen bis zu den Seitenflanken (7, 8) des Sägezahns verlaufende Schneidschulter (5, 6) anschließt.

2. Sägezahn nach Anspruch 1, **dadurch gekennzeichnet, dass** die Höhe des äußeren Endes der Schneidflanken (3, 4) größer als die Höhe der Schneidschultern (5, 6) ist und dass zwischen den Schneidflanken (3, 4) und den Schneidschultern (5, 6) jeweils eine Stirnflanke (9, 10) ausgebildet ist.

3. Sägezahn nach Anspruch 2, **dadurch gekennzeichnet, dass** die Stirnflanken (9, 10) jeweils parallel zur Mittelebene (2) des Sägezahns verlaufen.

4. Sägezahn nach einem oder mehreren der vorhergehenden Ansprüche, **dadurch gekennzeichnet, dass** der Winkel zwischen der Mittelebene (2) des Sägezahns und den Seitenflanken (7, 8) des Sägezahns als axialer Freiwinkel (11, 12) von 1 bis 3° ausgebildet ist.

5. Sägezahn nach Anspruch 2, **dadurch gekennzeichnet, dass** die Stirnflanken (9, 10) über einen Eckenradius von ≤ 0,5 mm in die Schneidschultern (5, 6) übergehen.

6. Sägezahn nach Anspruch 1, **dadurch gekennzeichnet, dass** die Schneidflanken (3, 4) in einem Dachwinkel (13) von 60 bis 90° zueinander verlaufen.

7. Sägezahn nach einem oder mehreren der vorhergehenden Ansprüche, **dadurch gekennzeichnet, dass** wenigstens eine der Schneidkanten (3, 4) oder Schneidschultern (5, 6) aus mit dem Träger des Sägezahns verbundenen Hartmetallschneiden gebildet ist.

8. Sägezahn nach einem oder mehreren der vorhergehenden Ansprüche, **dadurch gekennzeichnet, dass** der Spanwinkel (15) zwischen der Zahnstirnseite (14) und der Senkrechten auf die Bewegungsrichtung des Sägezahns in einem Winkel von 10 bis 20° ausgebildet ist.

9. Sägezahn nach einem oder mehreren der vorhergehenden Ansprüche, **dadurch gekennzeichnet, dass** der radiale Freiwinkel (16) zwischen der rechteckförmigen Dachfläche (17) des Sägezahns und der Laufrichtung des Sägezahns mit einem Winkel von 5 bis 10° ausgebildet ist.

10. Sägezahn nach einem oder mehreren der vorhergehenden Ansprüche, **dadurch gekennzeichnet, dass** der tangentiale Freiwinkel (18, 19) zwischen den Seitenflanken (7, 8) und der Bewegungsrichtung des Schneidzahns 1 bis 3° beträgt.

11. Kreissägeblatt mit auf dem Umfang hintereinander auf einem Träger angeordneten Sägezähnen nach einem oder mehreren der vorhergehenden Ansprüche.

12. Bandsäge mit entlang des Sägeblatts hintereinander angeordneten Sägezähnen nach einem oder mehreren der Ansprüche 1 bis 7.
